# EUROPÄISCHE PATENTSCHRIFT

(11) **EP 2 049 806 B1**
(45) Veröffentlichungstag und Bekanntmachung des Hinweises auf die Patenterteilung: **14.03.2012**
(21) Anmeldenummer: 07787444.4
(22) Anmeldetag: 12.07.2007
(51) Int. Cl.: F24H 9/06, F16B 5/02

(54) **BEFESTIGUNGSSYSTEM FÜR HAUSTECHNIKGERÄTE**
FASTENING SYSTEM FOR DOMESTIC APPLIANCES
SYSTÈME DE FIXATION POUR APPAREILS DOMESTIQUES

(30) Priorität: 28.07.2006 DE 102006035106
(43) Veröffentlichungstag der Anmeldung: 22.04.2009
(73) Patentinhaber: BSH Bosch und Siemens Hausgeräte GmbH, 81739 München (DE)
(72) Erfinder: BAUER, Franz, 83374 Traunwalchen (DE); BRAUN, Michael, 83324 Ruhpolding (DE); ENGLISCH, Christian, 83324 Ruhpolding (DE); HEINDL, Hans, 83278 Traunstein (DE)
(86) Internationale Anmeldenummer: PCT/EP2007/057173
(87) Internationale Veröffentlichungsnummer: WO 2008/012207

(56) Entgegenhaltungen:
- EP-A- 0 264 342
- DE-A1- 3 641 858
- DE-U1- 9 304 172
- FR-A- 2 680 208
- FR-A- 2 864 986
- GB-A- 1 561 985

## Beschreibung

Die vorliegende Erfindung betrifft einen Durchlauferhitzer mit einem Befestigungssystem aus Kunststoff.

Bei der Montage von Haustechnikgeräten wie Durchlauferhitzer sind Befestigungen von Vorteil, die schnell und sicher anzubringen sind, preisgünstig und möglichst verliersicher in unmittelbarer Nähe zum Montageort aufbewahrt werden können.

Befestigungen für Haustechnikgeräte sind im Stand der Technik bekannt. So beschreibt beispielsweise die DE 3837888 C2 eine Vorrichtung zur Befestigung eines Gerätes mittels Schrauben.

Im Stand der Technik stellt sich häufig das Problem, das dann, wenn ein Haustechnikgerät mittels Schrauben befestigt werden soll, häufig keine oder keine passenden Befestigungselemente oder Schraubverbindungen vorhanden sind. Eine Bevorratung von Schrauben aber, die getroffen werden könnte, um solch einem Fehlen von Schrauben bei der Montage vorzubeugen, ist mit unverhältnismäßig hohen Kosten verbunden. Es kann mitunter vorkommen, dass der Anwender angesichts der Tatsache, dass passende Schrauben nicht zur Hand sind, versucht, eine Montage mit nicht passenden Befestigungselementen, die er zur Hand hat, vorzunehmen. Dies kann dazu führen, dass das Haustechnikgerät eventuell beschädigt wird oder unsicher befestigt ist, so dass eine Gefahr für den Anwender besteht. Dieses ist bei elektronischen Haustechnikgeräten, und insbesondere bei solchen zur Warmwasserbereitung wie Durchlauferhitzern, nicht zu tolerieren.

Aufgabe der vorliegenden Erfindung ist es somit, eine Befestigung für Durchlauferhitzer zur Verfügung zu stellen, die einfach und kostengünstig hergestellt werden kann, möglichst verliersicher und insb. leicht und sicher zu montieren ist.

Die Aufgabe wird durch einen Durchlauferhitzer nach Anspruch 1 gelöst. Vorteilhafte Aus- und Weiterbildungen, welche einzeln oder in Kombination miteinander eingesetzt werden können, sind Gegenstand der Unteransprüche.

Die vorliegende Erfindung betrifft einen Durchlauferhitzer, mit einer aus Kunststoff gefertigten Geräterückwand, an welcher wenigstens ein Befestigungssystem angespritzt ist. Dieses stellt sicher, dass das wenigstens eine Befestigungssystem, dann, wenn der Durchlauferhitzer an der Wand befestigt werden soll, griffbereit ist. Mit einer einfachen Bewegung kann der Anwender dann das Befestigungssystem von der Geräterückwand des Durchlauferhitzers ablösen und die Montage vornehmen. Von besonderem Vorteil ist dabei, dass jeweils die für die Befestigung des Durchlauferhitzers passenden Befestigungselemente in ausreichender Anzahl an dem Durchlauferhitzer angespritzt sind. Dieses erleichtert die Montage erheblich.

Das erfindungsgemäße Befestigungssystem des Durchlauferhitzers, ist durch wenigstens zwei und höchstens vier Befestigungselemente, die über Spritzstege zu einer Einheit verbunden sind, gekennzeichnet. Dadurch wird gegenüber dem Stand der Technik eine deutliche Verbesserung bei der Montage des Durchlauferhitzers bei gleichzeitiger Kostenersparnis erzielt. Da das Befestigungssystem einstückig hergestellt bzw. zu einer Einheit spritztechnisch verbunden ist, hat der Anwender das System mit einem Handgriff zur Hand. Durch eine einfache Drehbewegung kann er die einzelnen Befestigungselemente des Befestigungssystems voneinander lösen. Da die Befestigungselemente zusammen gespritzt werden, ist ihre Herstellung günstiger als wenn sie einzeln hergestellt würden. Da die Befestigungselemente zusammen gespritzt sind, ist es für den Anwender selbsterklärend, welches Teil mit welchem wie verbunden werden muss. Es ist auch sichergestellt, dass alle Befestigungselemente jeweils vollständig vorliegen, da sie zusammengespritzt werden, und nur als vollständiger Satz vorliegen. Das Fehlen eines Teils ist so vorteilhaft vermieden.

Um auch etwaige Unebenheiten in einer Wand ausgleichen zu können umfasst das Befestigungssystem neben einem Wandhalter und einer Befestigungsschraube zusätzlich eine Stellschraube. So kann der Wandhalter mittels einer handelsüblichen Wandbefestigungsschraube und eines in der Wand befestigten Dübels angeschraubt werden. Anschließend wird die Stellschraube auf Wandabstand oder bündig auf dem Wandhalter befestigt. Schließlich wird eine Rückwand des Durchlauferhitzers aufgeschoben und mit der Befestigungsschraube befestigt.

Zur weiteren Reduzierung von verlierbaren Einzelteilen wird schließlich ein Befestigungssystem vorgeschlagen, welches neben dem Wandhalter, der Stellschraube, der Befestigungsschraube auch einen Dübel aufweist. Zusätzlich kann im Dübel bereits die Montageschraube vorgehaltert sein.

An der Geräterückwand sind bevorzugt die Anzahl an Befestigungssysteme angespritzt, welche zur Befestigung des Durchlauferhitzers insb. an einer Wand planmäßig benötigt bzw. vorgesehen sind.

Die Anzahl kann, je nach Auslegung und Dimensionierung der einzelnen Befestigungselemente, lediglich ein oder bis zu vier Befestigungssysteme je Durchlauferhitzer umfassen.

Insbesondere hat sich bewährt, dass das/die Befestigungssystem/e jeweils über lediglich einen Spritzsteg an der Gehäuserückwand angespritzt sind. Durch die lediglich einfache Fixierung des Befestigungssystems an der Gehäuserückwand kann dieses vorteilhaft ohne Kraftaufwand oder Hilfswerkzeug gelöst werden.

Die vorliegende Erfindung erleichtert die Montage eines Durchlauferhitzers und gewährleistet, dass diese Montage schnell, kostengünstig und sicher mit stets passenden Befestigungselementen erfolgt.

Weitere Merkmale und Vorteile der Erfindung ergeben sich aus der nachfolgenden Beschreibung eines Ausführungsbeispieles mit Bezug auf die beigefügten Zeichnungen.

Darin zeigen schematisch:
- Fig. 1: eine Ansicht eines Befestigungssystems für Haustechnikgeräte von schräg vorne;
- Fig. 2: eine Ansicht eines Wandhalters, welcher mit einer handelsüblichen Metallschraube (nicht abgebildet) und einem handelsüblichen Kunststoffdübel (nicht abgebildet) an einer Wand verschraubt wurde;
- Fig. 3: eine Ansicht einer Stellschraube, die auf Wandabstand auf dem Wandhalter aufgedreht wird;
- Fig. 4: eine Ansicht einer Befestigungsschraube, die auf der Stellschraube befestigt wurde, nachdem eine Rückwand aufgeschoben wurde; und
- Fig. 5: eine Ansicht einer Befestigung für Haustechnikgeräte sowie zusätzlich eine handelsübliche Metallschraube und einen handelsüblichen Kunststoffdübel, mit der die Befestigung an einer Wand befestigt werden kann.

Bei der nachfolgenden Beschreibung der bevorzugten Ausführungsformen bezeichnen gleiche Bezugszeichen gleiche oder vergleichbare Komponenten.

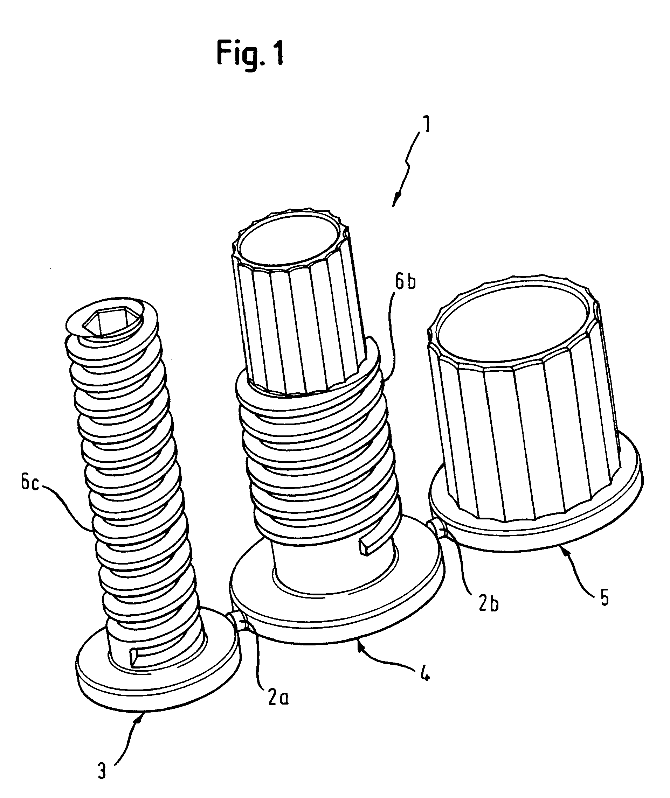

Fig. 1 zeigt ein Befestigungssystem 1 für Haustechnikgeräte. Das Befestigungssystem 1 ist aus Kunststoff gefertigt. Dies hat den Vorteil, dass die Herstellung besonders kostengünstig ist, und ein Befestigungssystem in jeder gewünschten Form ausgespritzt werden kann.

Wie in Fig. 1 dargestellt umfasst ein bevorzugtes Befestigungssystem 1 einen Wandhalter 3, eine Stellschraube 4 und eine Befestigungsschraube 5. Die einzelnen Befestigungselemente des Befestigungssystems 1 sind über Spritzstege 2a; 2b miteinander verbunden. Der Wandhalter 3 und die Stellschraube 4 weisen vorzugsweise ein Gewinde 6a; 6b auf. Dieses Gewinde 6a; 6b kann ein Trapezgewinde sein und eine Steigung von 2 bis 4, bevorzugt 3 mm aufweisen. Darüber hinaus kann das Befestigungssystem Bajonettverschlüsse und/oder Verrastungen aufweisen. Vorzugweise enthält das aus Kunststoff gespritzte Befestigungssystem 1 Polyethylen und/oder Polypropylen.

Bei Befestigungen von Haustechnikgeräten wie Durchlauferhitzern mittels lediglich eines Befestigungssystems 1 haben sich Wandhalter 3 mit einem Außendurchmesser von 5 bis 25 mm, bevorzugt von 10 bis 20 mm, und besonders bevorzugt von 16 mm bewährt. Die Stellschraube 4, die darauf befestigt wird, weist vorzugsweise einen Innendurchmesser von 5 bis 25 mm, bevorzugt von 10 bis 20 mm, und besonders bevorzugt von 16 mm, sowie einem Außendurchmesser von vorzugsweise 15 bis 30 mm, bevorzugt von 20 bis 26 mm, und besonders bevorzugt von 24 mm auf. Die Befestigungsschraube 5, die auf der Stellschraube 4 befestigt wird, weist vorzugsweise einen Innendurchmesser von 15 mm bis 30 mm, bevorzugt von 20 bis 26 mm, und besonders bevorzugt von 24 mm, sowie einem Außendurchmesser von 20 bis 35 mm, bevorzugt von 24 bis 32 mm, und besonders bevorzugt von 29 mm auf. Durch diese Abmessungen kann ein besonders gut an handelsübliche Wandbefestigungsschrauben angepasstes Befestigungssystem 1 bereitgestellt werden, welches mittels Dübel 8 und Schraube 7 an einer Wand verankerbar ist.

Erfindungsgemäß bevorzugt ist das Befestigungssystem 1 für Haustechnikgeräte an die Geräterückwand 7 des Haustechnikgerätes vorzugsweise über lediglich einen Spritzsteg angespritzt (nicht dargestellt).

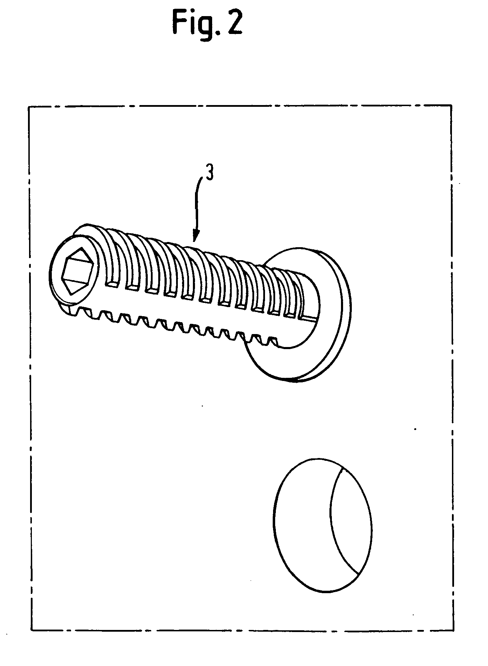

Fig. 2 zeigt einen Wandhalter 3, der mit einer Metallschraube 7 (nicht abgebildet) befestig wurde. Diese Schraube kann eine handelsübliche Wandbefestigungsschraube sein. Durch die Befestigung des Wandhalters 3 wird die Voraussetzung für die Wandmontage des Haustechnikgerätes geschaffen.

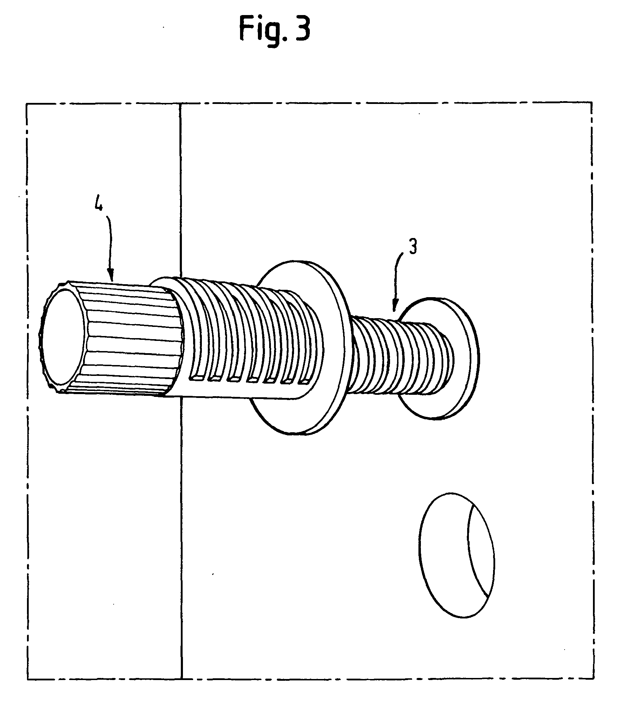

Fig. 3 zeigt eine Stellschraube 4, die auf Wandabstand auf dem Wandhalter 3 aufgedreht wurde. Hierfür ist die Gewindegröße der Stellschraube 4 an die Gewindegröße des Wandhalters 3 angepasst.

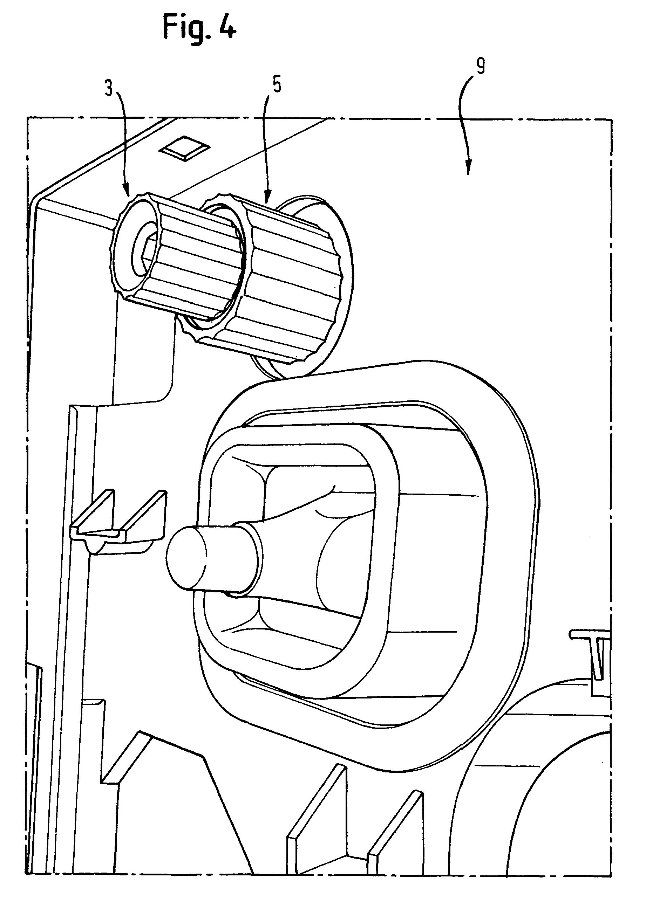

Fig. 4 zeigt eine Befestigungsschraube 5, die auf der Stellschraube 4 befestigt wurde, nachdem eine Rückwand 7 eines Haustechnikgerätes aufgeschoben wurde. Wird die Stellschraube 4 nun festgedreht, ist das Haustechnikgerät dauerhaft und sicher an der Wand befestigt.

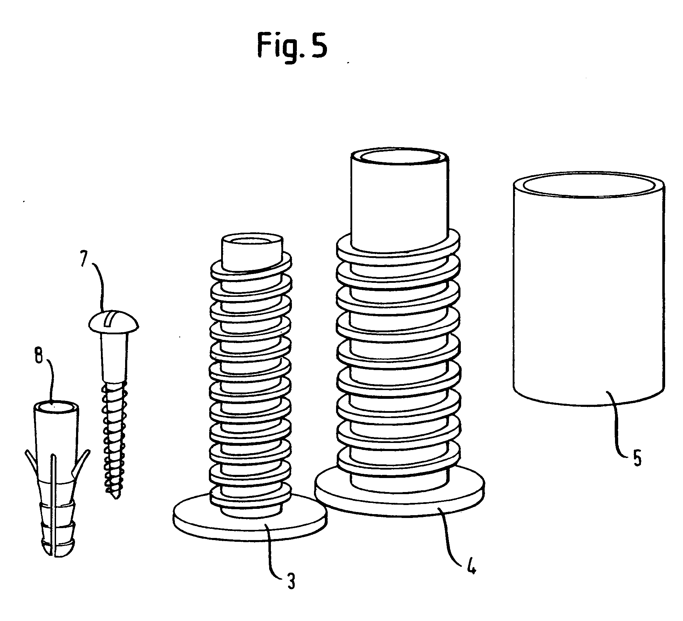

Fig. 5 zeigt eine Ansicht einer Befestigung für Haustechnikgeräte, vorzugsweise umfassend einen Wandhalter 3, eine Stellschraube 4 und eine Befestigungsschraube 5. Auf dieser Fig. sind der Wandhalter 3, die Stellschraube 4 und die Befestigungsschraube 5 nicht einstückig sondern voneinander getrennt. Zusätzlich abgebildet ist eine handelsübliche Metallschraube 7 und ein handelsüblicher Kunststoffdübel 8, mit der die Befestigung 1 an einer Wand befestigt werden kann.

Die vorliegende Erfindung erleichtert vorteilhaft die Montage eines Haustechnikgerätes und stellt sicher, dass diese Montage schnell, kostengünstig und sicher erfolgen kann.

### Bezugszeichenliste

- 1: aus Kunststoff gefertigtes Befestigungssystem
- 2a; 2b: Spritzsteg
- 3: Wandhalter
- 4: Stellschraube
- 5: Befestigungsschraube
- 6a; 6b: Gewinde
- 7: Metallschraube
- 8: Kunststoffdübel
- 9: Geräterückwand eines Haustechnikgerätes, insb. eines Durchlauferhitzers

## Patentansprüche

1. Durchlauferhitzer aufweisend eine aus Kunststoff gefertigte Geräterückwand (9), an welcher wenigstens ein Befestigungssystem (1) angespritzt ist, aufweisend wenigstens zwei (4, 5) und höchstens' vier (3, 4, 5, 8) Befestigungselemente, die über Spritzstege (2a, 2b, ...) zu einer Einheit verbunden sind, welches Befestigungssystem (1) durch einen Wandhalter (3), eine Stellschraube (4) und eine Befestigungsschraube (5) gekennzeichnet ist,
wobei der Wandhalter (3) an einer Wand verschraubbar ist,
wobei die Stellschraube (4) auf den Wandhalter (3) befestigbar ist, und
wobei die Befestigungsschraube (5) eingerichtet ist die Rückwand (9) des Durchlauferhitzers an einer Wand zu befestigen.

2. Durchlauferhitzer nach Anspruch 1, **dadurch gekennzeichnet, dass** an der Geräterückwand (9) eine Anzahl an Befestigungssystemen (1) angespritzt sind, welche zur Befestigung des Durchlauferhitzers planmäßig vorgesehen sind.

3. Durchlauferhitzer nach Anspruch 1 oder 2, **dadurch gekennzeichnet, dass** lediglich ein Befestigungssystem (1) an der Geräterückwand (9) angespritzt ist.

4. Durchlauferhitzer nach Anspruch 1 oder 2, **dadurch gekennzeichnet, dass** bis zu vier Befestigungssysteme (1) an der Geräterückwand (9) angespritzt sind.

5. Durchlauferhitzer nach einem der Ansprüche 1 bis 4, **dadurch gekennzeichnet, dass** das/die Befestigungssystem/e (1) jeweils über lediglich einen Spritzsteg (2) an der Gehäuserückwand (9) angespritzt sind.

6. Durchlauferhitzer nach Anspruch 1, **dadurch gekennzeichnet, dass** das Befestigungssystem einen Wandhalter (3), eine Stellschraube (4), eine Befestigungsschraube (5) und einen Dübel (8) aufweist.

7. Durchlauferhitzer nach Anspruch 6, **dadurch gekennzeichnet, dass** im Dübel (8) eine Montageschraube (7) gehaltert ist.

8. Durchlauferhitzer nach einem der vorhergehenden Ansprüche, **dadurch gekennzeichnet, dass** der Wandhalter (3) und die Stellschraube (4) ein Gewinde (6a, 6b) aufweisen.

9. Durchlauferhitzer nach einem der vorgehenden Ansprüche, **dadurch gekennzeichnet, dass** das Befestigungssystem (1) Bajonettverschlüsse und/oder Verrastungen aufweist.

10. Durchlauferhitzer nach einem der vorgehenden Ansprüche, **dadurch gekennzeichnet, dass** die Stellschraube (4) vorzugsweise einen Innendurchmesser von 5 bis 25 mm, bevorzugt von 10 bis 20 mm, und besonders bevorzugt von 16 mm, sowie einem Außendurchmesser von vorzugsweise 15 bis 30 mm, bevorzugt von 20 bis 26 mm, und besonders bevorzugt von 24 mm aufweist.

11. Durchlauferhitzer nach einem der vorgehenden Ansprüche, **dadurch gekennzeichnet, dass** die Befestigungsschraube (5), die auf der Stellschraube (4) befestigt wird, weist vorzugsweise einen Innendurchmesser von 15 mm bis 30 mm, bevorzugt von 20 bis 26 mm, und besonders bevorzugt von 24 mm, sowie einem Au-βendurchmesser von 20 bis 35 mm, bevorzugt von 24 bis 32 mm, und besonders bevorzugt von 29 mm auf.

12. Durchlauferhitzer nach einem der vorgehenden Ansprüche, **dadurch gekennzeichnet, dass** der Wandhalter (3) einen Außendurchmesser von 5 bis 25 mm, bevorzugt von 10 bis 20 mm, und besonders bevorzugt von 16 mm aufweist.

13. Durchlauferhitzer nach einem der vorgehenden Ansprüche, **dadurch gekennzeichnet, dass** das aus Kunststoff gespritzte Befestigungssystem (1) Polyethylen und/oder Polypropylen enthält.

## Claims

1. Throughflow heater comprising an appliance back wall (9), which is made of plastics material and on which at least one fastening system (1) is injection-moulded, comprising at least two fastening elements (4, 5) and at most four fastening elements (3, 4, 5, 8), connected into a unit by way of injection-moulded webs (2a, 2b, ...), which fastening system (1) is **characterised by** a wall mount (3), a setting screw (4) and a fastening screw (5), wherein the wall mount (3) is screw-connectible with a wall, wherein the setting screw (4) is fastenable to the wall mount (3) and wherein the fastening screw (5) is equipped for fastening the rear wall (9) of the throughflow heater to a wall.

2. Throughflow heater according to claim 1, **characterised in that** injection-moulded on the appliance rear wall (9) is a number of fastening systems (1) provided for fastening the throughflow heater according to intention.

3. Throughflow heater according to claim 1 or 2, **characterised in that** merely one fastening system (1) is injection-moulded on the appliance rear wall (9).

4. Throughflow heater according to claim 1 or 2, **characterised in that** up to four fastening systems (1) are injection-moulded on the appliance rear wall (9).

5. Throughflow heating according to any one of claims 1 to 4, **characterised in that** the fastening system or systems (1) is or are injection-moulded on the appliance rear wall (9) by way of merely one injection-moulded web (2).

6. Throughflow heater according to claim 1, **characterised in that in that** fastening system comprises a wall mount (3), a setting screw (4), a fastening screw (5) and a dowel (8).

7. Throughflow heater according to claim 6, **characterised in that** a mounting screw (7) is mounted in the dowel (8).

8. Throughflow heater according to any one of the preceding claims, **characterised in that** the wall mount (3) and the setting screw (4) have a thread (6a, 6b).

9. Throughflow heater according to any one of the preceding claims, **characterised in that** the fastening system (1) comprises bayonet couplings and/or detents.

10. Throughflow heater according to any one of the preceding claims, **characterised in that** the setting screw (4) preferably has an inner diameter of 5 to 25 millimetres, preferably from 10 to 20 millimetres, and particularly preferably of 16 millimetres, as well as an outer diameter of preferably 15 to 30 millimetres, preferably from 20 to 26 millimetres, and particularly preferably of 24 millimetres.

11. Throughflow heater according to any one of the preceding claims, **characterised in that** the fastening screw (5), which is fastened on the setting screw (4), preferably has an inner diameter of 15 millimetres to 30 millimetres, preferably from 20 to 26 millimetres, and particularly preferably of 24 millimetres, as well as an outer diameter of 20 to 35 millimetres, preferably of 24 to 32 millimetres, and particularly preferably of 29 millimetres.

12. Throughflow heater according to any one of the preceding claims, **characterised in that** the wall mount (3) has an outer diameter of 5 to 25 millimetres, preferably of 10 to 20 millimetres, and particularly preferably of 16 millimetres.

13. Throughflow heater according to any one of the preceding claims, **characterised in that** the fastening system (1) injection-moulded from plastics material includes polyethylene and/or polypropylene.

## Revendications

1. Chauffe-eau instantané présentant une paroi arrière d'appareil (9) fabriquée en matière plastique, sur laquelle au moins un système de fixation (1) est formé par injection, présentant au moins deux (4, 5) et au maximum quatre (3, 4, 5, 8) éléments de fixation qui sont raccordés en une unité par l'intermédiaire de ponts formés par injection (2a, 2b, ...), lequel système de fixation (1) est **caractérisé par** un support mural (3), une vis d'arrêt (4) et une vis de fixation (5),
le support mural (3) pouvant être vissé sur un mur,
la vis d'arrêt (4) pouvant être fixée sur le support mural (3), et
la vis de fixation (5) étant agencée pour fixer la paroi arrière (9) du chauffe-eau instantané sur un mur.

2. Chauffe-eau instantané selon la revendication 1, **caractérisé en ce qu'**un nombre de systèmes de fixation sont formés par injection sur la paroi arrière d'appareil (9), lesquels sont ménagés pour fixer le chauffe-eau instantané conformément au plan.

3. Chauffe-eau instantané selon la revendication 1 ou 2, **caractérisé en ce que** seulement un système de fixation (1) est formé par injection sur la paroi arrière d'appareil (9).

4. Chauffe-eau instantané selon la revendication 1 ou 2, **caractérisé en ce que** jusqu'à quatre systèmes de fixation (1) sont formés par injection sur la paroi arrière d'appareil (9).

5. Chauffe-eau instantané selon l'une quelconque des revendications 1 à 4, **caractérisé en ce que** le/les système/s de fixation (1) sont respectivement formés par injection sur la paroi arrière d'appareil (9) par l'intermédiaire de seulement un pont (2).

6. Chauffe-eau instantané selon la revendication 1, **caractérisé en ce que** le système de fixation présente un support mural (3), une vis d'arrêt (4), une vis de fixation (5) et une cheville (8).

7. Chauffe-eau instantané selon la revendication 6, **caractérisé en ce qu'**une vis de montage (7) est fixée dans la cheville (8).

8. Chauffe-eau instantané selon l'une quelconque des revendications précédentes, **caractérisé en ce que** le support mural (3) et la vis d'arrêt (4) présentent un filetage (6a, 6b).

9. Chauffe-eau instantané selon l'une quelconque des revendications précédentes, **caractérisé en ce que** le système de fixation (1) présente des fermetures à baïonnette et/ou des crans d'arrêt.

10. Chauffe-eau instantané selon l'une quelconque des revendications précédentes, **caractérisé en ce que** la vis d'arrêt (4) présente de préférence un diamètre intérieur de 5 à 25 mm, de manière préférée de 10 à 20 mm, et de manière particulièrement préférée de 16 mm, ainsi qu'un diamètre extérieur de préférence de 15 à 30 mm, de manière préférée de 20 à 26 mm, et de manière particulièrement préférée de 24 mm.

11. Chauffe-eau instantané selon l'une quelconque des revendications précédentes, **caractérisé en ce que** la vis de fixation (5) qui est fixée sur la vis d'arrêt (4) présente de préférence un diamètre intérieur de 15 à 30 mm, de manière préférée de 20 à 26 mm, et de manière particulièrement préférée de 24 mm, ainsi qu'un diamètre extérieur de 20 à 35 mm, de préférence de 24 à 32 mm, et de manière particulièrement préférée de 29 mm.

12. Chauffe-eau instantané selon l'une quelconque des revendications précédentes, **caractérisé en ce que** le support mural (3) présente un diamètre extérieur de 5 à 25 mm, de préférence de 10 à 20 mm, de manière particulièrement préférée de 16 mm.

13. Chauffe-eau instantané selon l'une quelconque des revendications précédentes, **caractérisé en ce que** le système de fixation (1) formé par injection en matière plastique contient du polyéthylène et/ou du polypropylène.
